# EUROPÄISCHE PATENTANMELDUNG

(11) **EP 1 615 413 A1**
(43) Veröffentlichungstag der Anmeldung: **11.01.2006**
(21) Anmeldenummer: 05105590.3
(22) Anmeldetag: 23.06.2005
(51) Int. Cl.: H04M 1/2745, H04Q 7/32

(54) **Verfahren zum Handhaben persönlicher Daten auf einem mobilen Kommunikationsendgerät**

(30) Priorität: 07.07.2004 DE 102004032900
(71) Anmelder: SIEMENS AKTIENGESELLSCHAFT, 80333 München (DE)
(72) Erfinder: Klinke, Stefano Ambrosius, 50169 Kerpen (DE)

(57) **Zusammenfassung**

Die Erfindung betrifft ein Verfahren zum Handhaben persönlicher Daten auf einem mobilen Kommunikationsendgerät, mit den Schritten:
a) Eingeben der persönlichen Daten in das mobile Kommunikationsendgerät,
b) Speichern der in Schritt a) eingegebenen persönlichen Daten in einem Speicher des mobilen Kommunikationsendgerätes zusammen mit einer Kennung, die einer benutzerspezifischen, aus dem mobilen Kommunikationsendgerät entnehmbaren und an einem bestimmten Platz angeordneten Hardware zugeordnet und auf dieser Hardware gespeichert ist.

## Beschreibung

Die Erfindung bezieht sich auf ein Verfahren zum Handhaben persönlicher Daten auf einem mobilen Kommunikationsendgerät.

Persönliche Daten werden auf einem mobilen Kommunikationsendgerät grundsätzlich in zwei verschiedenen Speichern abgelegt. Zum einen steht begrenzter Speicherplatz auf einer zugeordneten SIM-Karte zur Verfügung, der zur Aufnahme persönlicher Daten benutzt werden kann. Angesichts des erheblichen Umfangs persönlicher Adress- oder Telefonbücher sind viele mobile Kommunikationsendgeräte mit einem eigenen, d. h. von der SIM-Karte getrennten Speicher ausgestattet, der ebenfalls zur Aufnahme persönlicher Daten vorgesehen ist.

Die letztgenannten persönlichen Daten sind nach ihrer Abspeicherung auf dem mobilen Kommunikationsendgerät ungeschützt, denn sobald das mobile Kommunikationsendgerät in eingeschaltetem Zustand abhanden kommt, können dritte Personen unter Zuhilfenahme einer Benutzeroberfläche des mobilen Kommunikationsendgerätes den Speicherinhalt auslesen, der persönlichen Daten entspricht.

Insofern existiert ein Sicherheitsrisiko im Hinblick auf den Schutz persönlicher Daten, die auf einem mobilen Kommunikationsendgerät gespeichert sind.

Ausgehend hiervon liegt der Erfindung die Aufgabe zugrunde, die intern auf dem mobilen Kommunikationsendgerät gespeicherten persönlichen Daten besser vor fremden Zugriff zu stützen.

Diese Aufgabe wird gelöst durch ein Verfahren zum Handhaben persönlicher Daten auf einem mobilen Kommunikationsendgerät, mit den Schritten:
a) Eingeben der persönlichen Daten in das mobile Kommunikationsendgerät,
b) Speichern der in Schritt a) eingegebenen persönlichen Daten in einem Speicher des mobilen Kommunikationsendgerätes zusammen mit einer Kennung, die einer benutzerspezifischen, aus dem mobilen Kommunikationsendgerät entnehmbaren und an einem bestimmten Platz angeordneten Hardware zugeordnet und auf dieser Hardware gespeichert ist.

Aufgrund der dargestellten Vorgehensweise sind eingegebene persönliche Daten immer mit einer Kennung verknüpft, die dazu verwendet werden kann, einen Zugriff auf die persönlichen Daten zu beschränken. Lediglich Personen, die Zugang zu der betreffenden Hardware haben, sind in die Lage versetzt, auf die persönlichen Daten zugreifen zu können.

Ein Beispiel für eine Hardware, die als benutzerspezifisch im Sinne der Erfindung eingesetzt werden kann, ist eine SIM-Karte. Diese SIM-Karte enthält in ihrem Speicher eine sog. IMSI-Nummer, wobei die Abkürzung "IMSI" für "International Mobile Subscriber Identity" steht. Diese Nummer dient somit zur internationalen Kennung von Mobilfunkteilnehmern. Sie wird vor allem für internationales Roaming benutzt und unterstützt eine korrekte Abrechung von Gebühren. Insofern ist die IMSI-Nummer eine sehr geeignete benutzerspezifische Kennung einer aus dem mobilen Kommunikationsendgerät entnehmbaren und an einem bestimmten Platz angeordneten Hardware.

Wird bei einem mobilen Kommunikationsendgerät beispielsweise die SIM-Karte durch eine andere ausgetauscht, so dass das mobile Kommunikationsendgerät durch eine weitere Person benutzt wird, kann kein Zugriff auf die gespeicherten persönlichen Daten erfolgen.

Es ist von Vorteil, wenn die persönlichen Daten in dem Speicher des mobilen Kommunikationsendgerätes in einem Verzeichnis gespeichert werden, dem die Kennung zugeordnet ist. In dem Fall einer Mehrfachnutzung ein- und desselben mobilen Kommunikationsendgerätes durch mehrere Benutzer, die jeweils eine eigene SIM-Karte besitzen, ist eine entsprechende Anzahl von Verzeichnissen in dem Speicher des mobilen Kommunikationsendgerätes vorzusehen.

Bei einer bevorzugten Ausführungsform erfolgt in Schritt b) ein Eintrag in eine Verweistabelle, in der einer die persönlichen Daten enthaltenen Datei die damit zusammen gespeicherte Kennung zugeordnet ist.

Diese Verweistabelle kann dann zu Auslesezwecken herangezogen werden.

Das Verfahren ist im Hinblick auf das Auslesen der persönlichen Daten bevorzugt derart weiter gebildet, dass in einem dem Schritt b) nachfolgenden Schritt c) die persönlichen Daten aus dem Speicher ausgelesen werden, wobei eine Übereinstimmung der Kennung, mit der die persönlichen Daten in Schritt b) gespeichert worden sind, mit einer Kennung der aktuell in dem mobilen Kommunikationsendgerät an dem bestimmten Platz befindlichen Hardware vor dem Auslesen geprüft wird. Das Feststellen einer Übereinstimmung bewirkt ein Freischalten für das Auslesen der persönlichen Daten.

Zu diesem Zweck kann bevorzugt auf die Verweistabelle zurückgegriffen werden. Wenn beispielsweise eine bestimmte Datei mit persönlichen Daten nachgesucht wird, kann eine Anwendung des mobilen Kommunikationsendgerätes für die nachgesuchte Datei in der Verweistabelle beispielsweise die zugeordnete IMSI-Nummer auffinden und mit einer IMSI-Nummer der aktuell in dem mobilen Kommunikationsendgerät befindlichen SIM-Karte vergleichen.

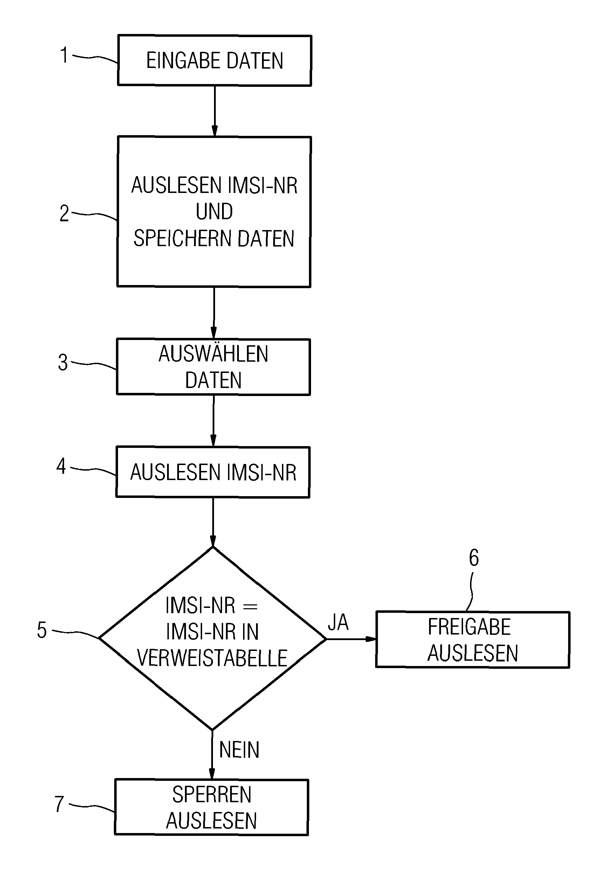

Die Erfindung wird nachfolgend unter Bezugnahme auf die Zeichnung anhand eines bevorzugten Ausführungsbeispiels noch näher erläutert. Die einzige Figur zeigt ein Ablaufdiagramm zur Veranschaulichung eines Verfahrens zum Handhaben persönlicher Daten bei einem mobilen Kommunikationsendgerät.

Bei einem Verfahren zum Handhaben persönlicher Daten auf einem mobilen Kommunikationsendgerät werden in einem ersten Verfahrensschritt über eine geeignete Mensch-Maschine-Schnittstelle, beispielsweise eine Taststatur, persönliche Daten in das mobile Kommunikationsendgerät eingegeben (Schritt 1). Grundsätzlich können persönliche Daten über jede externe Schnittstelle des mobilen Kommunikationsendgerätes importiert werden, so auch über eine vorgesehene Bluetooth-Schnittstelle.

Im Anschluss daran werden die persönlichen Daten, die in Form von Kontaktdaten einer dem Benutzer des mobilen Kommunikationsendgerätes bekannten Person vorliegen können, in einem Speicher des mobilen Kommunikationsendgerätes abgelegt. Dabei wird eine IMSI-Nummer der in das mobile Kommunikationsendgerät eingebauten SIM-Karte ausgelesen und gemeinsam mit den aktuell eingegebenen persönlichen Daten gespeichert (Schritt 2).

Die persönlichen Daten werden in Form einer Datei vorliegen. Diese Datei wird in dem Speicher des mobilen Kommunikationsendgerätes unter einem Verzeichnis abgelegt, das der zugehörigen IMSI-Nummer zugeordnet ist. Wird beispielsweise das mobile Kommunikationsendgerät von drei verschiedenen Personen benutzt, von denen jeder eine eigene SIM-Karte verwendet, so dass ebenso drei IMSI-Nummern vorliegen, werden in dem Speicher des mobilen Kommunikationsendgerätes drei Verzeichnisse angelegt, untere denen jeweilige persönliche Daten von einem der Benutzer zu speichern sind.

Mit dem Speichern der aktuell eingegebenen persönlichen Daten erfolgt ein Eintrag in eine Verweistabelle, in der die Datei der zugehörigen IMSI-Nummer zugewiesen wird. Die IMSI-Nummer fungiert als Kennung für ein späteres Auslesen der Datei, die die aktuell eingegebenen persönlichen Daten enthält.

Im Falle eines Auslesens der in der Datei befindlichen persönlichen Daten wird wie folgt vorgegangen: in einem weiteren Verfahrensschritt wird über dieselbe Mensch-Maschine-Schnittstelle, unterstützt durch eine Benutzeroberfläche des mobilen Kommunikationsendgerätes, eine gewünschte Datei ausgewählt (Schritt 3). Bevor diese Datei aus dem Speicher ausgelesen und ihr Inhalt auf der Benutzeroberfläche dargestellt wird, wird verfahrensgemäß in der Verweistabelle die bei dem Speichern der Datei zugeordnete IMSI-Nummer ausgelesen (Schritt 4). Außerdem wird auch die IMSI-Nummer der aktuell in dem mobilen Kommunikationsendgerät befindlichen SIM-Karte geprüft (Schritt 5). Liegt Übereinstimmung zwischen den beiden IMSI-Nummern vor, kann der Zugriff auf die gewünschte Datei erfolgen, d. h. das Auslesen der Datei wird freigegeben (Schritt 6), sonst wird das Auslesen gesperrt (Schritt 7).

## Patentansprüche

1. Verfahren zum Handhaben persönlicher Daten auf einem mobilen Kommunikationsendgerät, mit den Schritten:
a) Eingeben der persönlichen Daten in das mobile Kommunikationsendgerät,
b) Speichern der in Schritt a) eingegebenen persönlichen Daten in einem Speicher des mobilen Kommunikationsendgerätes zusammen mit einer Kennung, die einer benutzerspezifischen, aus dem mobilen Kommunikationsendgerät entnehmbaren und an einem bestimmten Platz angeordneten Hardware zugeordnet und auf dieser Hardware gespeichert ist.

2. Verfahren nach Anspruch 1,
bei dem als Kennung eine IMSI-Nummer einer einem Benutzer des mobilen Kommunikationsendgerätes zugewiesenen SIM-Karte verwendet wird.

3. Verfahren nach einem der Ansprüche 1 oder 2,
bei dem die persönlichen Daten in dem Speicher des mobilen Kommunikationsendgerätes in einem Verzeichnis gespeichert werden, dem die Kennung zugeordnet ist.

4. Verfahren nach einem der Ansprüche 1 bis 3,
bei dem in Schritt b) ein Eintrag in eine Verweistabelle erfolgt, in der einer die persönlichen Daten enthaltenden Datei die damit zusammengespeicherte Kennung zugeordnet ist.

5. Verfahren nach einem der Ansprüche 1 bis 4,
bei dem in einem dem Schritt b) nachfolgenden Schritt c) die persönlichen Daten aus dem Speicher ausgelesen werden, wobei eine Übereinstimmung der Kennung, mit der die persönlichen Daten in Schritt b) gespeichert worden sind, mit einer Kennung der aktuell in dem mobilen Kommunikationsendgerät an dem bestimmten Platz befindlichen Hardware vor dem Auslesen geprüft wird.
